# FASCICULE DE BREVET EUROPEEN

(11) **EP 0 544 555 B1**
(45) Date de publication et mention de la délivrance du brevet: **10.04.1996**
(21) Numéro de dépôt: 92403056.2
(22) Date de dépôt: 13.11.1992
(51) Int. Cl.: A01B 3/46, A01B 15/14

(54) **Charrue multi-socs réversible semi-portée**
Mehrscharaufsatteldrehpflug
Multiple share semi-mounted reversible plough

(30) Priorité: 28.11.1991 FR 9114746
(43) Date de publication de la demande: 02.06.1993
(73) Titulaire: HUARD S.A., F-44142 Chateaubriant Cédex (FR)
(72) Inventeur: Perret, Louis, F-44110 Chateaubriant (FR); Oger, Gérard, F-44660 Rouge (FR)
(74) Mandataire: Loyer, Bertrand

(56) Documents cités:
- EP-A- 0 318 391
- DE-U- 8 320 459
- FR-A- 2 201 022
- FR-A- 2 244 393
- FR-A- 2 616 999

## Description

La présente invention concerne d'une manière générale les charrues réversibles de type semi-portée, et plus particulièrement les charrues de grande longueur comportant un grand nombre de corps.

De manière connue en soi, de telles charrues comportant un grand nombre de corps présentent une poutre oblique à laquelle sont fixés les corps, ladite poutre étant soutenue par un essieu dispose soit à son extrémité arrière soit dans une portion médiane.

Lorsque le nombre de corps est très important, la poutre est composée d'une partie avant attelée au tracteur, d'une partie médiane formant un angle avec ladite partie avant et portée par l'essieu, et d'une partie arrière parallèle à la partie avant. Au cours du travail, les parties avant et arrière sont disposées en oblique par rapport à la direction du travail tandis que la partie médiane s'étend dans la direction du travail.

Ces charrues étant de très grande longueur, une dizaine de mètres, une différence importante de niveau peut apparaître entre le premier et le dernier corps lorsque le sol n'est pas parfaitement plan.

Afin d'apporter une solution à ce problème, il est connu de prévoir une articulation entre la partie médiane et la partie arrière de la poutre, au niveau de l'essieu de soutien, afin que la charrue suive la forme du terrain et que la profondeur de travail soit sensiblement la même pour les corps avant et pour les corps arrière quel que soit le profil du terrain.

Cette articulation est laissée libre au cours du travail, mais doit être bloquée au cours des manoeuvres de retournement de la charrue ainsi qu'au cours du transport de celle-ci.

Dans le document EP-A- 0 318 391, qui montre les caractéristiques du préambule de la revendication 1, il est décrit une charrue dont la partie médiane de la poutre est reliée à la partie arrière de celle-ci par un axe de liaison perpendiculaire au sens d'avancement, disposé horizontalement lorsque la charrue est en position de travail. Quatres moyens élastiques, sont disposés au-dessus et en-dessous de l'axe de liaison. Lors du travail de la charrue, la partie arrière peut pivoter autour de l'axe de liaison afin de suivre les irrégularités du terrain, tout en étant ramenée à sa position initiale par les moyens élastiques. Lorsque la charrue est en position de transport sur route, l'axe de liaison est disposé verticalement ce qui rend tout mouvement, vers le bas ou le haut, de la partie arrière impossible.

Par ailleurs, le document FR-A- 2 616 999 propose une articulation comportant des galets liés à l'une des parties de la poutre et commandés en déplacement afin d'être engagés ou non dans une gorge de l'autre partie de poutre. Les galets sont maintenus en dehors de la gorge au cours du travail par des ressorts tandis qu'ils sont poussés dans ladite gorge par des moyens puissants, tels qu'un vérin hydraulique, commandes par le conducteur avant et après chaque opération de retournement que ce soit en bout de champ ou en fin de travail. Un tel dispositif nécessite donc une intervention volontaire du conducteur s'ajoutant aux nombreuses autres interventions nécessaires lors des manoeuvres.

Le but de la présente invention est de proposer une articulation entre la partie médiane et la partie arrière de la poutre, dont le blocage est assuré de manière automatique lors du retournement de la charrue sans nécessiter d'intervention extérieure.

La présente invention concerne à cet effet une charrue multi-corps réversible semi-portée, du type comportant une poutre portant des corps de labour et réalisée en plusieurs parties : une partie avant, une partie médiane portée par un chariot intermédiaire et une partie arrière liée à la partie médiane par une articulation mobile au cours du travail et bloquée au cours de la phase de retournement de la poutre ou au cours du transport, ladite poutre présentant un plan médian qui s'étend, lorsque la charrue est dans une position de travail, au moins sensiblement horizontalement, caractérisée en ce que ladite articulation comporte trois points d'articulation implantés suivant un triangle isocèle disposé symétriquement par rapport audit plan médian de la poutre et transversalement à la direction d'avance au travail, ladite articulation comportant en sus des moyens qui, lorsque la charrue se trouve dans une position de travail, permettent un débattement relatif limité de la partie arrière par rapport à la partie médiane par pivotement autour de l'un ou l'autre de deux axes fictifs de rotation que constituent les deux côtés du triangle isocèle passant par le sommet de celui-ci, et qui, lorsque la poutre a été pivotée d'un quart de tour autour d'un axe dirigé suivant la direction d'avance, condamnent ledit pivotement relatif sous l'action du poids de la partie arrière de la poutre.

L'articulation de la charrue suivant l'invention est une articulation à trois points implantés suivant un triangle isocèle disposé symétriquement par rapport au plan médian de la poutre et transversalement à la direction d'avance au travail.

Le sommet dudit triangle isocèle est dans ledit plan médian de la poutre, tandis que les deux autres points dudit triangle isocèle s'étendent symétriquement par rapport à ce plan médian.

Au cours du travail, ces deux autres points du triangle isocèle s'étendent l'un au-dessus de l'autre dans une direction globalement verticale. Dans cette position, la partie arrière de la poutre peut pivoter, de façon limitée, autour de l'un ou de l'autre des deux axes fictifs constitués par les deux côtés égaux du triangle isocèle passant par le sommet de celui-ci, permettant ainsi à l'ensemble des corps de labour de travailler à une profondeur relativement constante.

Lorsque la poutre est pivotée d'un quart de tour autour d'un axe dirigé suivant la direction d'avance (phase de retournement ou position de transport), les deux points du triangle isocèle autres que le sommet s'étendent l'un à côté de l'autre dans une direction globalement horizontale. Dans cette position, l'action exercée par le poids de la partie arrière de la poutre permet auxdits moyens de condamner le pivotement de cette partie arrière autour des deux axes fictifs constitués par les deux côtés égaux du triangle isocèle passant par le sommet de ce dernier.

Le verrouillage et le déverrouillage de cette articulation ne nécessitent aucune intervention particulière et se font automatiquement lors du pivotement de la poutre autour de l'axe dirigé suivant la direction d'avance.

Dans une réalisation particulièrement avantageuse, il pourra être prévu que le sommet dudit triangle isocèle soit disposé sur le côté de la poutre opposé à celui où sont prévus les corps de labour, de telle sorte que, lorsque la poutre a été pivotée d'un quart de tour autour dudit axe dirigé suivant la direction d'avance, ledit sommet s'étende vers le bas.

Les moyens permettant d'une part le débattement de la partie arrière de la poutre par rapport à la partie médiane de cette dernière, et condamnant d'autre part ce débattement lorsque la poutre a été pivotée d'un quart de tour, pourront comporter :
- une rotule dont le centre constituera le sommet du triangle isocèle,
- deux pivots disposés chacun dans une mortaise respective dirigée au moins sensiblement perpendiculairement au triangle isocèle, chaque pivot et sa mortaise respective constituant l'un des deux autres points d'articulation.

Avantageusement, les pivots auront une forme complémentaire de celle de la mortaise respective, laquelle pourra présenter une extrémité arrière en forme de portée sphérique et une extrémité avant élargie.

L'extrémité arrière de la partie médiane de la poutre pourra en outre être pourvue :
- d'une plaque transversale à laquelle sera fixée la rotule, et
- d'un support longitudinal dans lequel seront pratiquées les mortaises.

L'extrémité avant de la partie arrière de la poutre pourra, quant à elle, également être pourvue d'une plaque transversale qui sera munie de trois chapes :
- une première chape à laquelle sera liée la rotule au moyen d'un axe, et
- deux autres chapes portant chacune l'un des deux pivots.

Il pourra en outre être prévu des moyens, tels que des vis, permettant de régler l'amplitude de l'articulation pour le travail, lesdits moyens s'étendant à travers la plaque transversale de la partie arrière de la poutre au droit des pivots.

Par ailleurs, il pourra être avantageusement prévu un élément d'amortissement entre la partie médiane et la partie arrière de la poutre pour amoindrir l'effet de choc qui peut apparaître lorsque, sous l'action du poids de la partie arrière de la poutre, les moyens bloquent l'articulation au cours du retournement de la poutre. Celui-ci sera, de préférence, disposé dans le plan médian de la poutre.

Il pourra, du reste, être prévu que la tension de cet élément d'amortissement soit réglable.

La présente invention sera mieux comprise par la description qui va suivre, faite en référence au dessin joint sur lequel :
- la figure 1 est une vue de dessus schématique d'une charrue réversible semi-portée ayant sept corps de labour,
- la figure 2 est une vue de côté suivant la flèche II de la figure 1, de l'articulation selon l'invention,
- la figure 3 est une vue de l'articulation en coupe suivant la ligne III-III de la figure 2,
- la figure 4 est une vue de l'articulation en coupe partielle suivant la ligne IV-IV de la figure 2,
- la figure 5 est une vue arrière schématique de la charrue selon l'invention en travail,
- la figure 6 est une vue arrière schématique de la charrue selon l'invention en cours de transport ou de retournement.

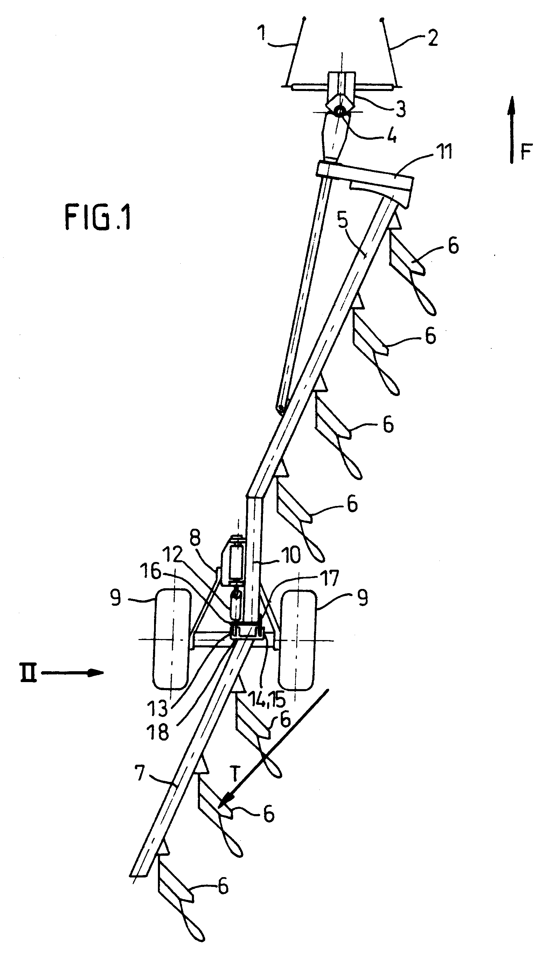

La charrue multi-corps réversible semi-portée selon l'invention représentée à la figure 1 est attelée à un tracteur dont on a uniquement représenté les bielles inférieures 1, 2 de son attelage.

L'attelage de la charrue au tracteur est fait par son avant-train 3 relié à l'arrière-train par un pivot vertical 4.

L'arrière-train se compose globalement d'une poutre portant des corps de labour 6 réversibles. Cette poutre est en trois parties : une partie avant 5, une partie médiane 10 et une partie arrière 7. Dans l'exemple représenté, la partie avant 5 porte quatre corps de labour 6, tandis que la partie arrière 7 porte trois tels corps de labour 6.

La partie médiane 10 est supportée par un chariot intermédiaire de transport 8 comportant deux roues 9.

L'on a représenté schématiquement en 11 le dispositif de retournement de la charrue et en 12 le dispositif de relevage de l'arrière-train.

Sur la figure 1, la charrue est représentée en position de travail derrière un tracteur avançant dans la direction F : la partie médiane 10 de la poutre est alors globalement dirigée dans cette direction F, tandis que les parties avant 5 et arrière 7 sont disposées obliquement par rapport à cette direction F.

L'articulation de la poutre se fait entre la partie médiane 10 et la partie arrière 7 de celle-ci et comporte, suivant l'invention, trois points 13, 14, 15 situés dans un plan globalement perpendiculaire à la direction d'avancement F.

Pour la réalisation de l'articulation suivant l'invention, l'extrémité arrière de la partie médiane 10 porte une plaque transversale 16 et un support longitudinal 17. Dans la réalisation représentée au dessin, ledit support longitudinal 17 est situé du même côté que les corps de labour.

La plaque transversale 16 porte une rotule 23 en un point situé sur le côté de la partie médiane 10 de la poutre opposé à celui portant le support longitudinal 17, c'est-à-dire opposé aux corps de labour 6, et dans le plan médian 33 (ici le plan de symétrie) de ladite poutre (sensiblement horizontal lorsque la charrue est en position de travail).

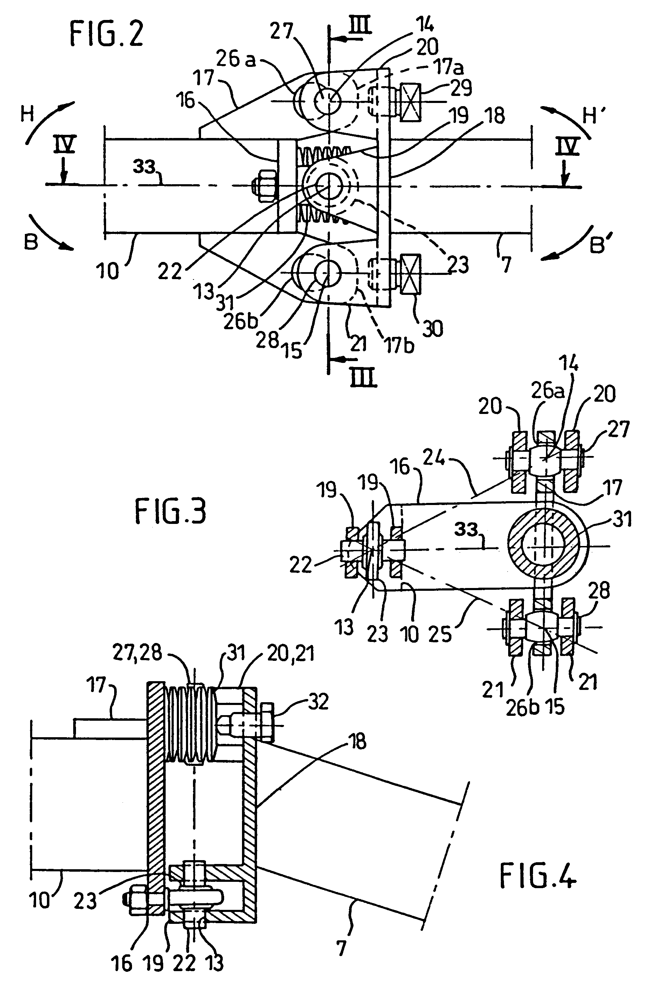

Le support longitudinal 17 présente, pour sa part, deux mortaises 26a et 26b disposées symétriquement au-dessus et en-dessous du plan de symétrie 33 de la charrue. Comme représenté à la figure 2, ces mortaises 26a et 26b ont une extrémité arrière formant une portée sphérique de faible diamètre et s'élargissent en direction de l'avant.

L'extrémité avant de la partie arrière 7 de la poutre comporte une plaque transversale 18 portant trois chapes 19, 20 et 21.

La chape 19 située en face de la rotule 23 de la partie médiane 10, porte un axe 22 monté dans ladite rotule 23. Les deux autres chapes 20 et 21 portent des pivots 27, 28 tourillonnants disposés dans les parties arrières des mortaises 26a et 26b.

Lesdits pivots 27, 28 sont conformés afin de correspondre aux portées sphériques arrières des mortaises 26a et 26b.

Lesdites mortaises 26a, 26b étant de largeur croissante vers l'avant, lesdits pivots 27, 28 sont libres lorsqu'ils sont amenés à se déplacer dans cette partie avant des mortaises 26a, 26b.

L'axe 22 et la rotule 23 ainsi que les pivots 27 et 28 et les mortaises 26a, 26b forment respectivement les points d'articulation 13, 14 et 15 disposés suivant un triangle isocèle ayant le point 13 pour sommet.

Lorsque la charrue travaille dans la position représentée à la figure 1, la force T supportée par les corps de labour 6 de la partie arrière 7 de la poutre, exerce un effort sur cette partie arrière 7 et met en appui les pivots 27 et 28 contre les portées sphériques arrière des mortaises 26a et 26b. La partie arrière 7 est ainsi tractée par la partie médiane 10.

Dans le cas où les corps de labour 6 de la partie avant 5 passent dans une zone de terrain en creux par rapport à la zone sur laquelle se trouve le chariot intermédiaire 8, la partie avant 5 et la partie médiane 10 sont animées d'un mouvement vers le bas dans le sens de la flèche B de la figure 2.

Le pivot 28 se déplace alors vers la partie avant élargie de la mortaise 26b, tandis que le pivot 27 reste dans la portée sphérique arrière de la mortaise 26a. La partie arrière 7 de la charrue est ainsi mobile par rapport a la partie médiane 10 autour d'un axe fictif 24 représenté à la figure 3 et joignant les points 13 et 14 de l'articulation selon l'invention, c'est-à-dire le centre de la rotule 23 et le pivot 27, ce qui permet à cette partie arrière 7 de demeurer sur le sol en se déplaçant dans le sens B' par rapport à la partie médiane 10.

Lorsque, à l'inverse, la partie avant 5 de la charrue passe sur une zone de terrain surélevée par rapport à la zone sur laquelle se trouve le chariot intermédiaire 8, la partie avant 5 et la partie médiane 10 se déplacent suivant la flèche H et le pivot 27 sort alors de la portée sphérique arrière de la mortaise 26a pour être dans la partie élargie de ladite mortaise 26a.

La partie arrière 7 de la charrue est ainsi mobile autour de l'axe fictif 25 joignant les points 13 et 15 de l'articulation matérialisés par le centre de la rotule 23 et le pivot 28 et demeure sur le sol en se déplaçant dans le sens H' par rapport à la partie médiane 10.

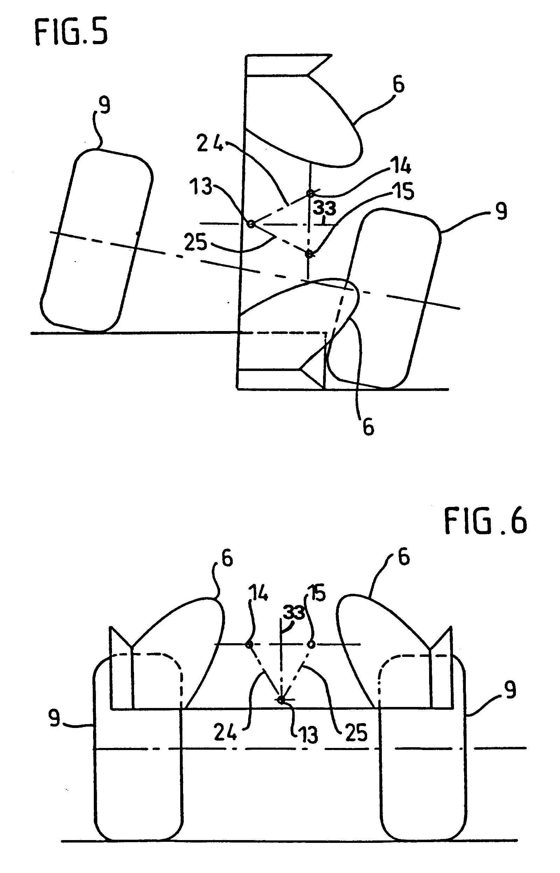

Sur la figure 5 représentant schématiquement la charrue en cours de travail et vue de l'arrière, l'on a représenté les axes 24 et 25 autour desquels est articulée la partie arrière 7 de la charrue par rapport à la partie médiane 10.

Des vis 29 et 30 disposées à travers la plaque transversale 18 au droit des pivots 27 et 28, et face auxquelles se déplacent les faces arrières 17a et 17b du support longitudinal 17, permettent à l'utilisateur de régler l'amplitude de l'articulation pour le travail.

Au cours du retournement de la charrue, après qu'un quart de tour ait été effectué, la charrue est dans la position représentée a la figure 6. Si l'un des pivots 27 ou 28 ne se trouve pas dans la portée sphérique arrière de la mortaise 26a, 26b correspondante, le poids de la partie arrière 7 de la charrue fait basculer cette partie arrière 7 autour du centre de la rotule 23 (point 13) pour que lesdits pivots 27, 28 soient tous les deux en appui dans la partie sphérique arrière des mortaises 26a, 26b.

L'articulation de la partie arrière 7 de la poutre sur la partie médiane 10 de celle-ci est alors automatiquement bloquée par l'action du poids propre de ladite partie arrière 7 suivant deux axes obliques 24, 25 convergents.

Le blocage est de plus parfaitement stable dans le montage suivant l'invention du fait que le point 13 est situé du côté de la poutre opposé aux corps de labour 6 ; il est en effet disposé sous ladite poutre lorsque le retournement d'un quart de tour est opéré.

L'articulation suivant l'invention ne nécessite aucun moyen pour ramener la partie arrière 7 de la charrue dans une position déterminée, seul le poids de celle-ci est utile que ce soit pour son articulation en cours de travail ou son blocage en cours de transport ou de retournement.

Le poids d'une telle partie arrière 7 étant de l'ordre de 1000 à 1500 kg, la charrue peut être tractée sans problèmes.

L'articulation suivant l'invention est une articulation à trois points, disposée dans un plan mobile en rotation sur lui-même, cette articulation est telle que lorsque ledit plan est dans une position, dite de travail, dans laquelle le sommet 13 est sur le côté et les mortaises 26a, 26b sont disposées l'une au-dessus de l'autre dans une direction globalement verticale, elle autorise le débattement relatif de la partie arrière 7 par rapport a la partie médiane 10, tandis que, lorsque le plan tourne sur lui-même d'un quart de tour afin d'être dans une position, dite de transport, dans laquelle le sommet 13 est disposé en-dessous des mortaises 26a, 26b qui sont l'une a côté de l'autre dans une direction globalement horizontale, ladite articulation empêche tout mouvement de la partie arrière 7 par rapport à la partie médiane 10.

Lors du retournement, le conducteur du tracteur actionne d'abord le relevage de l'attelage du tracteur et le dispositif de relevage 12 porté par le chariot intermédiaire 8. Cela a pour effet de relever la partie avant 5 et la partie médiane 10 de la poutre, par contre, lorsque la partie médiane 10 est relevée, la partie arrière 7 pivote autour de l'axe fictif 24 (lorsque la charrue est dans la position représentée à la figure 1) et cette partie arrière 7 prend une position de plus en plus oblique. Les dimensions des mortaises 26a, 26b sont déterminées de façon que le mouvement de pivotement, vers le bas, de la partie arrière 7 par rapport a la partie médiane 10 soit limité (de l'ordre de 5 à 10 degrés), alors que le dispositif de relevage 12 est lui déterminé de façon à relever la partie médiane 10 de façon importante ; il en résulte que, bien que la partie arrière 7 de la poutre soit inclinée vers le bas, le dernier corps de labour 6 est dégagé du sol, ce qui permet d'actionner le retournement.

Dès que l'on approche de la position médiane, ou position de transport, la partie arrière 7 pivote en sens inverse, du fait de son poids, pour revenir à sa position de départ. Il s'avère alors que ce retour en position neutre de l'articulation se fait assez brutalement du fait du poids très important de la partie arrière 7, ce qui provoque un choc.

Pour amoindrir l'effet de choc, on a disposé un élément d'amortissement dans le plan de symétrie 33 de la poutre entre les plaques transversales 16 et 18 de la partie médiane 10 et de la partie arrière 7.

Dans l'exemple de réalisation de la figure 4, cet élément d'amortissement est constitué par un empilage de rondelles Belleville 31 dont la tension est réglée par une vis de réglage 32.

Dans la pratique, le conducteur opère le retournement en deux temps. Dans un premier temps, lorsqu'il arrive en bout de rangée, le conducteur relève la charrue a l'aide de l'attelage du tracteur et du dispositif de relevage 12 du chariot intermédiaire 8 et la fait pivoter d'un quart de tour. Il exécute alors les manoeuvres de demi-tour du tracteur pour le présenter en début de la nouvelle rangée à travailler ; puis il exécute le deuxième quart de tour du retournement et abaisse la charrue. Lors de ces manoeuvres, la charrue est souvent assez fortement secouée et risque de pivoter légèrement autour de l'un ou l'autre des axes fictifs 24 et 25 : l'élément d'amortissement encaisse alors tous les chocs qui peuvent se produire.

Bien entendu d'autres moyens que les rondelles Belleville 31, par exemple hydrauliques, peuvent être mis en oeuvre comme élément d'amortissement.

## Revendications

1. Charrue multi-corps réversible semi-portée, du type comportant une poutre portant des corps de labour (6) et réalisée en plusieurs parties : une partie avant (5), une partie médiane (10) portée par un chariot intermédiaire (8) et une partie arrière (7) liée à la partie médiane (10) par une articulation mobile au cours du travail et bloquée au cours de la phase de retournement de la poutre (5, 10, 7) ou au cours du transport, ladite poutre (5, 10, 7) présentant un plan médian (33) qui s'étend, lorsque la charrue est dans une position de travail, au moins sensiblement horizontalement, caractérisée en ce que ladite articulation comporte trois points d'articulation (13, 14, 15) implantés suivant un triangle isocèle disposé symétriquement par rapport audit plan médian (33) de la poutre (5, 10, 7) et transversalement à la direction d'avance (F) au travail, ladite articulation comportant en sus des moyens (23, 26a, 26b, 27, 28) qui, lorsque la charrue se trouve dans une position de travail, permettent un débattement relatif limité de la partie arrière (7) par rapport à la partie médiane (10) par pivotement autour de l'un ou de l'autre de deux axes fictifs de rotation (24, 25) que constituent les deux côtés du triangle isocèle passant par le sommet (13) de celui-ci, et qui, lorsque la poutre (5, 10, 7) a été pivotée d'un quart de tour autour d'un axe dirigé suivant la direction d'avance (F), condamnent ledit pivotement relatif sous l'action du poids de la partie arrière (7) de la poutre (5, 10, 7).

2. Charrue selon la revendication 1, caractérisée en ce que le sommet (13) dudit triangle isocèle est disposé sur le côté de la poutre (5, 10, 7) opposé à celui où sont prévus les corps de labour (6), de telle sorte que, lorsque la poutre (5, 10, 7) a été pivotée d'un quart de tour autour de l'axe dirige suivant la direction d'avance (F), ledit sommet (13) s'étende vers le bas.

3. Charrue selon la revendication 1 ou 2, caractérisée en ce que lesdits moyens (23, 26a, 26b, 27, 28) comportent d'une part une rotule (23) dont le centre constitue le sommet (13) du triangle isocèle, et d'autre part deux pivots (27, 28) disposés chacun dans une mortaise (26a, 26b) respective dirigée au moins sensiblement perpendiculairement au triangle isocèle, chaque pivot (27, 28) et sa mortaise (26a, 26b) respective constituant l'un des deux autres points d'articulation (14, 15).

4. Charrue selon la revendication 3, caractérisée en ce que chaque mortaise (26a, 26b) présente une extrémité arrière en forme de portée sphérique et une extrémité avant élargie.

5. Charrue selon la revendication 4, caractérisée en ce que les pivots (27, 28) ont une forme complémentaire de celle des portées sphériques.

6. Charrue selon l'une quelconque des revendications 3 à 5, caractérisée en ce que l'extrémité arrière de la partie médiane (10) de la poutre (5, 10, 7) est pourvue d'une plaque transversale (16) et d'un support longitudinal (17), ladite rotule (23) étant fixée à ladite plaque transversale (16), tandis que lesdites mortaises (26a, 26b) sont pratiquées dans ledit support longitudinal (17).

7. Charrue selon l'une quelconque des revendications 3 à 6, caractérisée en ce que l'extrémité avant de la partie arrière (7) de la poutre (5, 10, 7) est pourvue d'une plaque transversale (18) munie de trois chapes (19, 20, 21), la rotule (23) étant liée à l'une desdites chapes (19, 20, 21) au moyen d'un axe (22), tandis que chacun des deux pivots (27, 28) est porté par l'une respective des deux autres chapes (20, 21).

8. Charrue selon la revendication 7, caractérisée en ce que des moyens tels que des vis (29, 30) permettent de régler l'amplitude de l'articulation pour le travail, lesquels s'étendent à travers la plaque transversale (18) de la partie arrière (7) de la poutre (5, 10, 7) au droit des pivots (27, 28).

9. Charrue selon l'une quelconque des revendications 1 à 8, caractérisée en ce qu'un élément d'amortissement est disposé dans le plan médian (33) de la poutre (5, 10, 7) entre la partie médiane (10) et la partie arrière (7) de celle-ci.

10. Charrue selon la revendication 9, caractérisée en ce que la tension dudit élément d'amortissement est réglable.

11. Charrue selon la revendication 10, caractérisée en ce que l'extrémité arrière de la partie médiane (10) et l'extrémité avant de la partie arrière (7) de la poutre (5, 10, 7) sont chacune pourvues d'une plaque transversale (16, 18) respective, et que l'élément d'amortissement est constitué d'un empilage de rondelles Belleville (31) en appui contre la plaque transversale (16) de la partie médiane (10) de la poutre (5, 10, 7) et dont la tension est réglable au moyen d'une vis de réglage (32) s'étendant à travers ladite plaque transversale (18) de la partie arrière (7) de la poutre (5, 10,7).

## Claims

1. A multi-share reversible semi-mounted plough, of the type including a beam carrying ploughing bodies (6) and formed in several parts : a forward part (5), a middle part (10) carried by an intermediate carriage (8) and a rear part (7) connected to the middle part (10) by a linkage movable during working and locked during the phase of reversing the beam (5, 10, 7) or during transport, the beam (5, 10, 7) having a median plane (33) which extends, when the plough is in a working position, at least substantially horizontally, characterised in that the linkage includes three articulation points (13, 14, 15) positioned according to an isosceles triangle disposed symmetrically with respect to the median plane (33) of the beam (5, 10, 7) and transversely to the direction (F) of working travel, the aforesaid linkage including, in addition, means (23, 26a, 26b, 27, 28) which, when the plough is in a working position, permits a limited relative clearance of the rear part (7) with respect to the middle part (10) by pivoting about one or other of two imaginary axes of rotation (24, 25) constituted by the two sides of the isosceles triangle passing through the apex (13) of the latter, and which, when the beam (5, 10, 7) has been pivoted through a quarter of a turn about an axis directed along the direction (F) of travel, prevents the aforesaid relative pivoting under the action of the weight of the rear part (7) of the beam (5, 10, 7).

2. A plough according to Claim 1, characterised in that the apex (13) of the isosceles triangle is disposed on the side of the beam (5, 10, 7) opposed to that on which the ploughing bodies (6) are provided, such that, when the beam (5, 10, 7) has been pivoted by a quarter of a turn about the axis directed along the direction (F) of travel, the apex (13) extends downwardly.

3. A plough according to Claim 1 or 2, characterised in that the means (23, 26a, 26b, 27, 28) include, on the one hand, a trunnion (23) of which the centre constitutes the apex (13) of the isosceles triangle, and on the other hand, two pivots (27, 28) each disposed in a respective slot (26a, 26b) directed at least substantially perpendicularly to the isosceles triangle, each pivot (27, 28) and its respective slot (26a, 26b) constituting one of the other two articulation points (14, 15).

4. A plough according to Claim 3, characterised in that each slot (26a, 26b) has a rear end in the form of a spherical bearing and an enlarged forward end.

5. A plough according to Claim 4, characterised in that the pivots (27, 28) have a shape complementary to that of the spherical bearings.

6. A plough according to any one of Claims 3 to 5, characterised in that the rear end of the middle part (10) of the beam (5, 10, 7) is provided with a transverse plate (16) and a longitudinal support (17), the aforesaid trunnion (23) being fixed to the transverse plate (16), whilst the slots (26a, 2b) are formed in the longitudinal support (17).

7. A plough according to any one of Claims 3 to 6, characterised in that the forward end of the rear part (7) of the beam (5, 10, 7) is provided with a transverse plate (18) having three yokes (19, 20, 21), the trunnion (23) being connected to one of the yokes (19, 20, 21) by means of a shaft (22), whilst each of the two pivots (27, 28) is carried by the respective one of the two other yokes (20, 21).

8. A plough according to Claim 7, characterised in that means such as screws (29, 30) allow the amplitude of the articulation for working to be adjusted, which screws extend through the transverse plate (18) of the rear part (7) of the beam (5, 10, 7) in line with the pivots (27, 28).

9. A plough according to any one of Claims 1 to 8, characterised in that a damping element is disposed in the median plane (33) of the beam (5, 10, 7) between the middle part (10) and the rear portion (7) of the latter.

10. A plough according to Claim 9, characterised in that the stress of the aforesaid damping element is adjustable.

11. A plough according to Claim 10, characterised in that the rear end of the middle part (10) and the forward end of the rear part (7) of the beam (5, 10, 7) are each provided with a respective transverse plate (16, 18), and that the damping element is constituted by a stack of Belleville washers (31) bearing against the transverse plate (16) of the middle part (10) of the beam (5, 10, 7) and of which the stress is adjustable by means of an adjusting screw (32) extending through the transverse plate (18) from the rear part (7) of the beam (5, 10, 7).

## Patentansprüche

1. Mehrscharaufsatteldrehpflug mit einem Träger, der die Pflugschare (6) trägt und aus mehreren Abschnitten besteht: einem Vorderabschnitt (5), einem Mittelabschnitt (10), der von einem Zwischenwagen (8) getragen wird, und einem hinteren Abschnitt (7), der mit dem Mittelabschnitt (10) über ein Gelenk verbunden ist, das während der Arbeit beweglich und während der Phase des Hochkippens des Trägers (5, 10, 7) oder während des Transportes blockiert ist, wobei der Träger (5, 10, 7) eine Mittelebene (33) aufweist, die, wenn sich der Pflug in einer Arbeitsstellung befindet, zumindest im wesentlichen horizontal verläuft, **dadurch gekennzeichnet, daß** das Gelenk drei Gelenkpunkte (13, 14, 15) umfaßt, die entsprechend einem gleichschenkeligen, symmetrisch zu Mittelebene (33) des Trägers (5, 10, 7) und quer zur Vorwärtsrichtung (F) bei Arbeitseinsatz angeordneten Dreieck angebracht sind, wobei das Gelenk ferner Einrichtungen (23, 26a, 26b, 27, 28) aufweist, die, wenn sich der Pflug in einer Arbeitstellung befindet, eine begrenzte relative Ausfederung des hinteren Abschnitts (7) zum Mittelabschnitt (10) durch Verschwenkung um die eine oder die andere der beiden fiktiven, die beiden Schenke des gleichschenkeligen Dreiecks, die durch die Spitze (13) verlaufen, bildenden Drehachsen (24, 25) gestatten und die, wenn der Träger (5, 10, 7) um eine in Vorwärtsrichtung (F) ausgerichtete Achse gedreht wurde, besagte relative Verschwenkung unter Einwirkung des Gewichts des hinteren Abschnitts (7) des Trägers (5, 10, 7) begrenzen.

2. Pflug nach Anspruch 1, dadurch gekennzeichnet, daß die Spitze (13) des gleichschenkeligen Dreiecks auf der Seite des Trägers (5, 10, 7) angeordnet ist, die der Seite gegenüberliegt, auf welcher die Pflugschare vorgesehen sind, derart daß, wenn der Träger (5, 10, 7) um eine Vierteldrehung um die in Vorwärtsrichtung (F) liegende Achse verdreht wurde, die Spitze (13) nach unten weist.

3. Pflug nach Anspruch 1 oder 2, dadurch gekennzeichnet, daß die Einrichtungen (23, 26a, 26b, 27, 28) zum einen ein Kugelgelenk (23, dessen Mittelpunkt die Spitze (13) des gleichschenkeligen Dreiecks bildet, und zum anderen zwei Drehzapfen (27, 28) aufweisen, deren jeder in einem jeweiligen Zapfenloch (26a, 26b) angeordnet ist, das zumindest im wesentlichen senkrecht zum gleichschenkeligen Dreieck liegt, wobei jeder Drehzapfen (27, 28) und sein jeweiliges Zapfenloch (26a, 26b) einen der beiden anderen Gelenkpunkte (14, 15) bilden.

4. Pflug nach Anspruch 3, dadurch gekennzeichnet, daß jedes Zapfenloch (26a, 26b) ein hinteres Ende in Form einer kugelförmigen Lagerfläche und ein vergrößertes vorderes Ende aufweist.

5. Pflug nach Anspruch 4, dadurch gekennzeichnet, daß die Drehzapfen (27, 28) eine der Form der kugelförmigen Lagerfläche komplementäre Form aufweisen.

6. Pflug nach einem der Ansprüche 3 bis 5, dadurch gekennzeichnet, daß das hintere Ende des Mittelabschnitts (10) des Trägers (5, 10, 7) mit einer Querplatte (16) und einer Längsstütze (17) versehen ist, wobei das Kugelgelenk (23) fest an der Querplatte (16) derart befestigt ist, daß die Zapfenlöcher (26a, 26b) in der Längsstütze (17) ausgebildet sind.

7. Pflug nach einem der Ansprüche 3 bis 6, dadurch gekennzeichnet, daß das vordere Ende des hinteren Abschnitts (7) des Trägers (5, 10, 7) mit einer quer angeordneten Platte (18) versehen ist, die drei Gabelbügel (19, 20, 21) aufweist, wobei das Kugelgelenk (23) mit einem dieser Gabelbügel (19, 20, 21) über eine Achse (22) verbunden ist, während jeder der beiden Drehzapfen (27, 28) jeweils von einem der beiden anderen Gabelbügel (20, 21) getragen wird.

8. Pflug nach Anspruch 7, dadurch gekenzeichnet, daß Mittel, wie Schrauben (19, 30), eine Einstellung der Amplitude der Verschwenkung bei der Arbeit zulassen, wobei diese Mittel durch die quer angeordnete Platte (18) des hinteren Abschnitts (7) des Trägers (5, 10, 7) rechtwinkelig zu den Drehzapfen (27, 28) verlaufen.

9. Pflug nach einem der Ansprüche 1 bis 8, dadurch gekennzeichnet, daß ein Dämpfungselement in der Mittelebene (33) des Trägers (5, 10, 7) zwischen dem Mittelabschnitt (10) und dem hinteren Abschnitt (7) desselben vorgesehen ist.

10. Pflug nach Anspruch 9, dadurch gekennzeichnet, daß die Spannung des Dämpfungselementes einstellbar ist.

11. Pflug nach Anspruch 10, dadurch gekennzeichnet, daß das hintere Ende des Mittelbereiches (10) und des vordere Ende des hinteren Bereiches (7) des Trägers (5, 10, 7) jeweils mit einer Querplatte (16, 18) versehen ist, und daß das Dämpfungselement von einer Packung von Belleville-Dichtungsringen (31) gebildet wird, welche gegen die Querplatte (16) des Mittelabschnitts (17) des Trägers (5, 10, 7) anlegen und deren Spannung mit einer Einstellschraube (32), welche durch die Querplatte (18) des hinteren Abschnitts (7) des Trägers (5, 10, 7) hindurch verläuft, einstellbar ist.
